# EUROPÄISCHE PATENTSCHRIFT

(11) **EP 2 802 429 B1**
(45) Veröffentlichungstag und Bekanntmachung des Hinweises auf die Patenterteilung: **14.11.2018**
(21) Anmeldenummer: 13700380.2
(22) Anmeldetag: 14.01.2013
(51) Int. Cl.: B22F 1/00, C22C 24/00, C23C 8/40

(54) **PHOSPHORBESCHICHTETE LITHIUMMETALLPRODUKTE, VERFAHREN ZU DEREN HERSTELLUNG UND VERWENDUNG**
PHOSPHOROUS-COATED LITHIUM METAL PRODUCTS, METHOD FOR PRODUCTION AND USE THEREOF
PRODUITS EN MÉTAL LITHIUM REVÊTUS DE PHOSPHORE, PROCÉDÉ DE FABRICATION ET UTILISATION DESDITS PRODUITS

(30) Priorität: 13.01.2012 DE 102012200460
(43) Veröffentlichungstag der Anmeldung: 19.11.2014
(73) Patentinhaber: Albemarle Germany GmbH, 65926 Frankfurt am Main (DE)
(72) Erfinder: WIETELMANN, Ulrich, 61381 Friedrichsdorf (DE); HARTNIG, Christoph, 65817 Eppstein (DE); EMMEL, Ute, 65929 Frankfurt am Main (DE); SCHRÖTER, Sven, 64293 Darmstadt (DE)
(74) Vertreter: Rottmayer, Hans
(86) Internationale Anmeldenummer: PCT/EP2013/050571
(87) Internationale Veröffentlichungsnummer: WO 2013/104788

(56) Entgegenhaltungen:
- WO-A1-2011/073324
- US-A1- 2004 253 510
- US-A1- 2008 283 155

## Beschreibung

Die Erfindung betrifft partikelförmige mit einer phosphorhaltigen Schicht ausgerüstete Lithiummetall-Kompositmaterialien, ein Verfahren zur Herstellung eines solchen phosphorbeschichteten Lithiummetallproduktes und dessen Verwendung.

Wiederaufladbare elektrochemische Speichersysteme erlangen gegenwärtig für viele Bereiche des täglichen Lebens eine steigende Bedeutung. Neben den schon seit längerem bestehenden Anwendungen als Automobilstarterbatterie und als Energiequelle für die portable Elektronik werden in der Zukunft starke Zuwächse für den Antrieb von Elektroautos und für die stationäre Energiespeicherung vorhergesagt. Für die neuen Anwendungen kommen traditionelle Blei/Schwefelsäureakkumulatoren nicht in Frage, weil sie eine viel zu geringe Kapazität aufweisen und sie nicht genügend häufig zyklisierbar sind. Beste Chancen werden dagegen Lithiumbatterien eingeräumt.

Heutige Lithiumionenbatterien enthalten aus Gründen der Sicherheit kein metallisches Lithium, sondern ein graphitisches Material als Anode. Die Verwendung von Graphit, das im geladenen Zustand bis zur Grenzzusammensetzung LiC6 geladen werden kann, hat jedoch zur Folge, dass die Kapazität gegenüber der Verwendung von metallischem Lithium deutlich niedriger ist.

Lithium gehört zu den Alkalimetallen. Wie auch die schwereren Elementhomologa der ersten Hauptgruppe ist es durch ein starkes Reaktionsvermögen gegenüber einer Vielzahl von Stoffen gekennzeichnet. So reagiert es heftig, häufig unter Entzündung mit Wasser, Alkoholen und anderen Stoffen, die protischen Wasserstoff enthalten. An Luft ist es unbeständig und es reagiert mit Sauerstoff, Stickstoff und Kohlendioxid. Es wird deshalb normalerweise unter Inertgas (Edelgase wie Argon) gehandhabt und unter einer schützenden Schicht aus Paraffinöl gelagert.

Des Weiteren reagiert es mit vielen funktionalisierten Lösungsmitteln, selbst wenn diese keinen protischen Wasserstoff enthalten. Beispielsweise werden zyklische Ether wie THF unter Ringspaltung geöffnet, Ester und Carbonylverbindungen werden generell lithiiert und/oder reduziert. Häufig wird die Reaktion zwischen den genannten Chemikalien bzw. Umweltstoffen durch Wasser katalysiert. So kann Lithiummetall in trockener Luft über längere Zeiträume gelagert und verarbeitet werden, da es eine einigermaßen stabile Passivierungsschicht ausbildet, die weitergehende Korrosion verhindert. Ähnliches gilt für funktionalisierte Lösemittel, beispielsweise N-Methyl-2-pyrrolidon (NMP), welches in wasserfreier Form wesentlich weniger reaktiv gegenüber Lithium ist als z.B. mit Wassergehalten > einige 100 ppm.

Um die Lagerfähigkeit von Lithiummetall und die Sicherheit bei der Verarbeitung zu erhöhen, wurde eine Reihe von korrosionsvermindernden Beschichtungsverfahren entwickelt. So ist es beispielsweise aus US 5,567,474 und US 5,776,369 bekannt, geschmolzenes Lihiummetall mit CO₂ zu behandeln. Für die Beschichtung wird typischerweise flüssiges Lithium in einem inerten Kohlenwasserstoff mindestens 1 Minute mit mindestens 0,3 % CO₂ in Verbindung gebracht. Der damit bewirkte Schutz reicht aber für viele Anwendungen, speziell für die Vorlithiierung von Batterieelektrodenmaterialien in N-Methyl-2-pyrrolidon (NMP)-Suspension, nicht aus.

Eine weitere Methode, Lithiummetall zu stabilisieren besteht darin, es über seinen Schmelzpunkt zu erhitzen, das geschmolzene Lithium zu rühren und es mit einem Fluorierungsmittel, beispielsweise Perfluoropentylamin, in Kontakt zu bringen (WO 2007/005983 A2). Nachteilig ist, dass Fluorierungsmittel häufig giftig oder ätzend sind und deshalb in der industriellen Praxis ungern eingesetzt werden.

Ein weiteres Verfahren zur schützenden Oberflächenbehandlung von Lithiummetall besteht darin, es mit einer Wachsschicht, beispielsweise einem Polyethylenwachs zu beschichten (WO 2008/045557 A1). Nachteilig ist, dass relativ viel Beschichtungsmittel aufzuwenden ist. In den Beispielen der genannten Patentanmeldung etwa 1 %.

In US2009/0061321 A1 wird vorgeschlagen, ein stabilisiertes Lithiummetallpulver mit einer im Wesentlichen kontinuierlichen Polymerbeschichtung herzustellen. Das Polymer kann ausgewählt sein aus der Gruppe Polyurethane, PTFE, PVC, Polystyrol u.a. Nachteilig an diesem Verfahren ist, dass das geschützte Lithiummetall eine undefinierte Oberflächenbeschichtung organischer Substanzen bekommt, die bei seiner nachfolgenden Verwendung, beispielsweise für die Vorlithiierung von Elektrodenmaterialien, stören können.

Weiterhin ist eine Anode für eine elektrochemische Zelle, die ein metallisches Material mit einer sauerstoffhaltigen Beschichtung enthält, mit einer (weiteren) Schutzschicht, welche durch Umsetzung von D- oder P-Block-Precursoren mit dieser sauerstoffhaltigen Schicht entsteht, bekannt (WO 2010/101856 A1, US 2007/0082268 A1, US 2009/0220857 A1). Die Schutzschicht des Metallanodenmaterials wird hergestellt durch Behandlung eines metallischen Materials, welches eine sauerstoffhaltige Beschichtung aufweist, mit mindestens zwei Verbindungen, wobei die erste Verbindung eine große Molekülverbindung und die zweite Verbindung eine kleine Molekülverbindung ist (US 7,776,385 B2, US 2011/0104366 A1). Bei dieser Art der Schutzschichtbildung reagieren sauerstoffhaltige Oberflächengruppen (beispielsweise Hydroxyfunktionen) mit den D- oder P-Blockprecursoren, beispielsweise einem Kieselsäureester in einem nicht-hydrolytischen Sol-Gel Prozess miteinander und es bildet sich auf der Anodenoberfläche beispielsweise ein Film bestehend aus SiO₂. Die Behandlung erfolgt bei Raumtemperatur.

Schließlich wird in US 2008/0283155 A1 ein Verfahren zur Stabilisierung von Lithiummetall beschrieben, das durch folgende Schritte gekennzeichnet ist:
a) Erhitzen von Lithiummetallpulver über den Schmelzpunkt, um geschmolzenes Lithiummetall herzustellen,
b) Dispergieren des geschmolzenen Lithiummetalls; und
c) Inkontaktbringen des geschmolzenen Lithiummetalls mit einer Phosphor enthaltenden Substanz, um eine im wesentlichen kontinuierliche Schutzschicht von Lithiumphosphat auf dem Lithiummetallpulver zu erzeugen. Als Phosphor enthaltende Substanzen werden anorganische Verbindungen mit Phosphor in der Oxidationsstufe 5 aufgeführt: Phosphorsäure (H₃PO₄), P₂O₅ und POF₃. Das Hantieren mit sauren, hygroskopischen festen Stoffen (wasserfreie Phosphorsäure und P₂O₅) ist im industriellen Maßstab nicht einfach. Besonders anspruchsvoll ist die Handhabung von gasförmigem und giftigem Phosphoroxyfluorid.

Außerdem ist die Stabilität eines nur einmal beschichteten Metallpulvers in N-Methylpyrrolidon (NMP) völlig unzureichend. Erst durch eine weitere unabhängige Beschichtung mit einem Wachs (LuwaxS dry powder) kann ein bei 30°C stabiles Produkt erhalten werden.

Die Erfindung hat sich die Aufgabe gestellt, ein oberflächenstabilisiertes Anodenmaterial auf Lithiummetallbasis mit hoher spezifischer Oberfläche anzugeben, welches wenig reaktiv und in gängigen Anlagen gefahrlos handhabbar ist, dessen Oberflächenbeschichtung ionisch und elektronisch leitfähig ist, wobei die Oberflächenbeschichtung möglichst keine störenden Fremdelemente (hinsichtlich der jeweiligen Batteriechemie) enthält sowie ein Verfahren zur einfachen, unter Benutzung einer zum Stand der Technik alternativen Phosphorquelle erfolgenden, insbesondere einstufigen Herstellung eines solchen Produktes.

Die Aufgabe wird durch ein partikuläres Kern/Schale-Material bestehend aus einem Metallkern und einer Hülle bestehend aus einem phosphorhaltigen Material gelöst, bei dem die Schale aus einem P-haltigen Kompositmaterial besteht und der Kern aus metallischem Lithium, wobei die Schale P in der Oxidationsstufe 3 oder niedriger enthält und der Kern aus metallischem Lithium besteht sowie die Schale kein röntgendiffraktometrisch nachweisbares Lithiumphosphat enthält und die einzelnen Partikel nicht größer als 500 µm sind. Weiterhin wird ein Verfahren aufgezeigt, das die Erzeugung eines solchen Lithiummetalls mit hoher spezifischer Oberfläche und mit einer passivierenden, jedoch leitfähigen Umhüllung ermöglicht, bei dem geschmolzenes, tröpfchenförmiges Lithiummetall in einem Kohlenwasserstofflösungsmittel mit einer Phosphorquelle enthaltend den Phosphor in der Oxidationsstufe 3, ausgewählt aus den Gruppen Phosphonsäure, Alkylphosphonsäure, Alkylphosphonsäure-dialkylester, Alkylphosphonsäure-dihalogenide, Alkenylphosphonsäure, Alkenylphosphonsäure-dihalogenide, Alkenylphosphonsäure-dialkylester, Phosphorigsäure-dialkylester, Phosphorigsäure-dialkenylester und Phosphorigsäure-diarvlester, Phosphorigsäure-trialkylester, Phosphorigsäurealkyester-dihalogenide umgesetzt wird.

Das erfindungsgemäße Produkt wird in einem Kohlenwasserstoff-basierten Lösungsmittel und bei Temperaturen von von 180°C bis 250°C und bevorzugt von 180°C bis 220°C hergestellt. Dabei wird das stöchiometrische Verhältnis zwischen Lithium und Benzylphosphonsäure, Vinylphosphonsäure-dichlorid, Vinylphosphonsäuredimethylester, Vinylphosphonsäure-diethylester, Vinylphosphonsäuredipropylester, Vinylphosphonsäure-dibutylester, Allylphosphonsäure-dichlorid, Allylphosphonsäure-dibutylester und dergleichen. Besonders bevorzugt sind Phosphonsäurederivate, die mindestens einen ungesättigten Kohlenwasserstoffrest (z.B. Allyl, Vinyl) enthalten. Besonders bevorzugt sind auch Phosphorverbindungen der aufgeführten Stoffgruppen, die kein Halogenid enthalten. Verbindungen mit Halogen-Phosphorbindungen werden nämlich im Kontakt mit Lithium unter Bildung von Lithiumhalogenid gespalten. Das Lithiumhalogenid wird, da es im verwendeten inerten Lösemittel auf Kohlenwasserstoffbasis nicht löslich ist, in der Coatingschicht abgeschieden, d.h. es bildet sich ein partikuläres Lithium, das in seiner Schale sowohl Phosphor als auch Lithiumhalogenid enthält. Beim Einsatz eines solchen Pulvers in einer Lithiumbatterie, die in der Regel Flüssigelektrolyte enthält, die wiederum polare organische Lösungsmittel enthalten, löst sich das Lithiumhalogenid und es kann dann mit allen Batteriekomponenten in Berührung kommen. Es ist bekannt, dass Lithiumhalogenide, besonders LiCI, LiBr und Lil korrosiv auf den Kathodenstromableiter (in der Regel aus Aluminium bestehend) wirken. Durch diesen Angriff wird die kalendarische Lebenszeit der Batterie in Mitleidenschaft gezogen (siehe z.B. H.B. Han, J. Power Sources 196 (2011) 3623-32).

Die bevorzugten Herstellbedingungen sind so zu wählen, dass zunächst ungecoatete Lithiumtröpfchen mit einem mittleren Durchmesser von maximal 500 µm, bevorzugt maximal 200 µm und besonders bevorzugt maximal 100 µm vorliegen. Dies erfolgt nach Stand der Technik durch Verwendung eines hohe Scherkräfte einbringenden Rührorgans, beispielsweise einer Dispergierscheibe (Zahnscheibenrührer) oder eines Zerstäubungsrührers, beispielsweise einem Dispergierrührer, "Ultraturrax". Alternativ kann die Partikelherstellung auch durch ein Verdüsungsverfahren bewerkstelligt werden. In diesem Falle wird schmelzflüssiges Lithium in eine Inertgasatmosphäre versprüht. Das nach Erkalten und Erstarren erhaltene Metallpulver kann dann in einem inerten Lithiumhalogenide, besonders LiCI, LiBr und Lil korrosiv auf den Kathodenstromableiter (in der Regel aus Aluminium bestehend) wirken. Durch diesen Angriff wird die kalendarische Lebenszeit der Batterie in Mitleidenschaft gezogen (siehe z.B. H.B. Han, J. Power Sources 196 (2011) 3623-32).

Die bevorzugten Herstellbedingungen sind so zu wählen, dass zunächst ungecoatete Lithiumtröpfchen mit einem mittleren Durchmesser von maximal 500 µm, bevorzugt maximal 200 µm und besonders bevorzugt maximal 100 µm vorliegen. Dies erfolgt nach Stand der Technik durch Verwendung eines hohe Scherkräfte einbringenden Rührorgans, beispielsweise einer Dispergierscheibe (Zahnscheibenrührer) oder eines Zerstäubungsrührers, beispielsweise einem Dispergierrührer, "Ultraturrax".

Nach der Bildung von Lithiumtröpfchen mit dem gewünschten Partikeldurchmesser erfolgt die Umsetzung mit einem oder mehreren der erfindungsgemäßen phosphorhaltigen Passivierungsmittel, wodurch die Bildung einer passivierenden, jedoch leitfähigen Oberflächenschichtung bewirkt wird. Nach Ausbildung der passivierenden, leitfähigen Oberflächenbeschichtung sind die Rühr- und Homogenisierbedingungen so zu wählen, dass die Oberflächenbeschichtung nicht wieder zerstört wird. Dies wird erreicht durch einen wenig abrasiven Rührprozess.

Anstelle eines Hochenergierührers können auch andere dem Stand der Technik entsprechende Dispergierverfahren, beispielsweise Ultraschallzerstäubung, zum Einsatz kommen.

Das Lösungsmittel wird bevorzugt aus der Gruppe gesättigter Kohlenwasserstoffe ausgewählt. Bevorzugt werden Lösungsmittel verwendet, die bei den gewählten Umsetzungsbedingungen flüssig sind, die also Siedepunkte von mindestens 180°C, besser mindestens 200°C und besonders bevorzugt Siedepunkte > 220°C aufweisen. Beispiele sind: Decan, Undekan, Dodecan oder beliebige Mischungen dieser genannten Verbindungen, egal ob linear, verzweigt oder zyklisch. Ganz besonders bevorzugt sind kommerziell erhältliche Paraffin-Siedeschnitte, wie z.B. Shellsol® D70 oder D100.

Das eingesetzte Lithiummetall hat bevorzugt eine Reinheit von mindestens 98 Gew.-%, besonders bevorzugt wird es in Batteriequalität eingesetzt. Der Natriumgehalt liegt bevorzugt unter 200 ppm, besonders bevorzugt unter 100 ppm und ganz besonders bevorzugt unter 50 ppm.

Es wurde überraschend gefunden, dass sich bei der Verwendung der erfindungsgemäßen phosphorhaltigen Passivierungsmittel stabile Lithiummetallpulverprodukte herstellen lassen, die in NMP mit Wassergehalten von etwa 200 ppm bis mindestens 50°C, bevorzugt bis 80°C über viele Stunden stabil sind, d.h. keine signfikante exotherme Reaktion, insbesondere kein "run away-Phänomen" zeigen.

Das erfindungsgemäße Produkt ist im Vergleich zu der üblicherweise verwendeten Lithiumfolie durch eine hohe spezifische Oberfläche, bedingt durch die partikuläre, häufig sphärische Morphologie und Partikelgrößen < 500 µm, gekennzeichnet. Bevorzugte mittlere Partikelgrößen liegen zwischen 1 und 500 µm, bevorzugt 10 und 200 µm und besonders bevorzugt zwischen 15 und 100 µm.

Die Erfindung wird nachfolgend an Hand von 2 Beispielen sowie 1 Abbildung näher erläutert.

Die Produktstabilität wird mittels DSC ("differential scanning calorimetry") bestimmt. Es kam eine Apparatur der Firma *Systag*, Schweiz (das *Radex*-System) zum Einsatz. In die Probengefäße wurden unter Schutzgasatmosphäre etwa 2 g NMP und 0,1 g Lithiummetallpulver eingewogen. Proben wurden bei bestimmten Temperaturen 15 h gelagert. Die Partikelgrößenverteilung wurde mit einem Gerät der der Firma *Mettler-Toledo*, dem *Lasentec-FBRM*-in-line-Analysator, bestimmt.

Es zeigen:

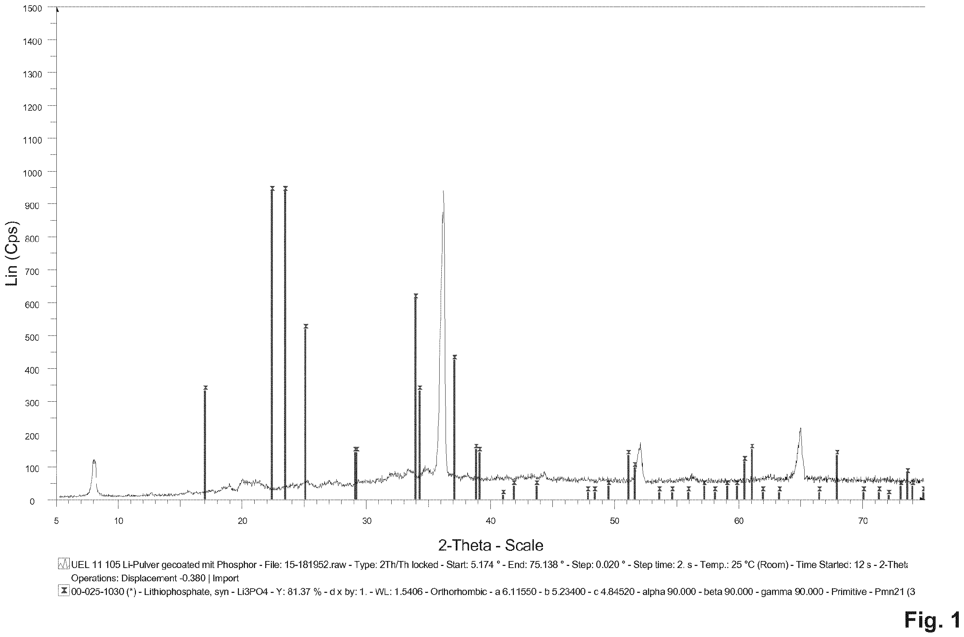

- Fig. 1:: Röntgendiffraktogramm des Produktes, hergestellt nach Beispiel 1, wobei x: Reflexe von Lithiummetall anzeigen und Striche: die Reflexlagen von Li₃PO₄ (nicht anwesend) anzeigen würden

### Beispiele

### Beispiel 1: Herstellung von phosphor-beschichtetem Lithium aus geschmolzenem Lithiummetall und 0,6 mol-% Vinylphosphonsäure bei 210°C in Paraffinöl

In einem inertisierten (d.h. wasser- und luftfreiem, mit Ar gefüllten) Edelstahl-Doppelmantelreaktor ausgerüstet mit einem Hochenergierührorgan (Ultraturrax) wurden 19,6 g Lithiummetall in 520 g Shellsol® D100 vorgelegt und unter Rühren bei 210°C Manteltemperatur aufgeschmolzen. Nach vollständigem Aufschmelzen wurde das Lithium mit Hilfe des Hochenergierührers zu einer feinen Emulsion verarbeitet (einige Minuten bei 16.000 Umdrehungen pro Minute (upm)). Dann wurden 1,69 g Vinylphophonsäure (0,6 mol%) als 30%ige Abmischung mit Shellsol® D100 durch eine Reaktoröffnung innerhalb von 3 Minuten zugespritzt. Nach Zugabeende wurde der Rührer abgestellt, dann auf Raumtemperatur (RT) abgekühlt und die Suspension mittels Teflontauchrohr auf eine Filterfritte gedrückt, gewaschen (erst mit Shellsol®, dann dreimal mit Pentan) und bei RT bis zur Gewichtskonstanz getrocknet. Es wurden 20,0 g eines grau-metallisch aussehenden, frei fließenden Pulvers erhalten.
Ausbeute: 20,0 g (102% d. Th.);
Mittlere Partikelgröße: 50 µm;
Metallgehalt: 97,2 % (gasvolumetrisch);
P-Gehalt: 1,65 Gew.%;
Stabilität in NMP, Wassergehalt 167 ppm: kein signifikantes Exotherm bei 15-stündiger Lagerung bei 80°C; bei 90°C-Lagerung run away nach etwa 1 h; bei 100°C-Lagerung run away nach wenigen Minuten;
Röntgendiffraktometrie: es können sehr schwache Reflexe, möglicherweise von elementarem schwarzem Phosphor, jedoch kann kein Lithiumphosphat (Li₃PO₄) nachgewiesen werden

### Beispiel 2: Herstellung von phosphor-beschichtetem Lithium aus geschmolzenem Lithiummetall und 0,3 mol-% Vinylphosphonsäure bei 210°C in Paraffinöl

In einem inertisierten (d.h. wasser- und luftfreiem, mit Ar gefüllten) Edelstahl-Doppelmantelreaktor ausgerüstet mit einem Hochenergierührorgan (Ultraturrax) wurden 21,0 g Lithiummetall in 506 g Shellsol® D100 vorgelegt und unter Rühren bei 210°C Manteltemperatur aufgeschmolzen. Nach vollständigem Aufschmelzen wurde das Lithium mit Hilfe des Hochenergierührers zu einer feinen Emulsion verarbeitet. Dann wurden 1,09 g Vinylphophonsäure (0,3 mol%) als 30%ige Abmischung mit Shellsol® D100 durch eine Reaktoröffnung innerhalb von 2 Minuten zugespritzt. Nach Zugabeende wurde der Rührer abgestellt, dann auf RT abgekühlt und die Suspension mittels Teflontauchrohr auf eine Filterfritte gedrückt, gewaschen (erst mit Shellsol®, dann dreimal mit Pentan) und bei RT bis zur Gewichtskonstanz getrocknet. Es wurden 21,7 g eines grau-metallisch aussehenden, frei fließenden Pulvers erhalten.
Ausbeute: 21,7 g (103 % d. Th.);
Mittlere Partikelgröße: 57 µm;
Metallgehalt: 97 % (gasvolumetrisch);
P-Gehalt: 1,15 Gew.%;
Stabilität in NMP, Wassergehalt 167 ppm: kein signifikantes Exotherm bei 15-stündiger Lagerung bei 80°C; bei 90°C-Lagerung kein signifikantes Exotherm innerhalb von 15 h

Die Erfindung betrifft im Einzelnen:
- Partikuläres Lithiummetall-Kompositmaterial, welches eine Kern/Schale-Morphologie besitzt, wobei die Schale aus einem P-haltigen Kompositmaterial besteht und der Kern aus metallischem Lithium, welches eine Kern/Schale-Morphologie besitzt, wobei die Schale P in der Oxidationsstufe 3 oder niedriger enthält und der Kern aus metallischem Lithium besteht, wobei die einzelnen Partikel nicht größer als 500 µm sind;
- Kompositmaterial, welches eine Kern/Schale-Morphologie besitzt, wobei die Schale P in der Oxidationsstufe 3 oder niedriger enthält und die weiterhin kein Halogen, insbesondere kein Cl, Br und/oder I enthält und der Kern aus metallischem Lithium besteht;
- Kompositmaterial, wobei min 90 Gew.-%, bevorzugt mindestens 95 Gew.-% und besonders bevorzugt mindestens 97 Gew.-% des enthaltenen Lithiums in metallischer Form vorliegen;
- Kompositmaterial, wobei die Reinheit des eingesetzten Lithiummetalls mindestens 98 Gew.-% beträgt;
- Kompositmaterial, wobei der der Gehalt an Natrium bezogen auf den Gesamtlithiumgehalt maximal 200, bevorzugt maximal 100 ppm und besonders bevorzugt maximal 50 ppm beträgt;
- Kompositmaterial, wobei die mittlere Partikelgröße zwischen 1 und 500 µm, bevorzugt zwischen 10 und 200 µm und besonders bevorzugt zwischen 15 und 100 µm beträgt;
- Verfahren zur Herstellung eines partikulären phosphorbeschichteten Lithiummetall-Kompositmaterials, wobei geschmolzenes, tröpfchenförmiges Lithiummetall in einem Kohlenwasserstofflösungsmittel mit einer Phosphorquelle enthaltend den Phosphor in der Oxidationsstufe 3, ausgewählt aus den Gruppen Phosphonsäure, Alkylphosphonsäure, Alkylphosphonsäure-dialkylester, Alkylphosphonsäure-dihalogenide, Alkenylphosphonsäure, Alkenylphosphonsäure-dihalogenide, Alkenylphosphonsäure-dialkylester, Phosphorigsäure-dialkylester (Dialkylphosphite), Phosphorigsäure-dialkenylester und Phosphorigsäure-diarylester, Phosphorigsäure-trialkylester, Phosphorigsäurealkyester-dihalogenide umgesetzt wird;
- Verfahren, bei dem als Phosphorquelle bevorzugt Phosphonsäurederivate, die mind. einen ungesättigten Kohlenwasserstoffrest (z.B. Allyl, Vinyl) enthalten, eingesetzt werden;
- Verfahren, bei dem als Phosphorquelle bevorzugt Phosphonsäure oder Phosphonsäurederivate, die kein Halogen, insbesondere kein Cl, Br und/oder I enthalten, eingesetzt werden;
- Verfahren, bei dem die Umsetzung bei Temperaturen im Bereich von 180°C bis 250°C und bevorzugt 180°C bis 220°C vorgenommen wird;
- Verfahren, bei dem als Kohlenwasserstofflösungsmittel bevorzugt gesättigte Lösungsmittel verwendet werden, die bei den besonders bevorzugten Umsetzungsbedingungen flüssig sind, die also Siedepunkte von mindestens 180°C, vorzugsweise mindestens 200°C und besonders bevorzugt Siedepunkte > 220°C aufweisen;
- Verfahren, bei dem als Kohlenwasserstofflösungsmittel bevorzugt Decan, Undekan, Dodecan oder beliebige Mischungen dieser genannten Verbindungen, egal ob linear, verzweigt oder zyklisch eingesetzt werden;
- Verfahren, bei dem als Kohlenwasserstofflösungsmittel besonders bevorzugt kommerziell erhältliche Paraffin-Siedeschnitte, wie z.B. Shellsol® D70 oder D100 verwendet wird;
- Verwendung des partikulären phosphorbeschichteten Lithiummetall-Kompositmaterials für die Vorlithiierung von elektrochemisch aktiven Materialien, z.B. Graphit-, Legierungs- oder Konversionsanoden für Lithiumbatterien;
- Verwendung des partikulären phosphorbeschichteten Lithiummetall-Kompositmaterials für die Herstellung von Elektroden, insbesondere Anoden für Lithiumbatterien.

## Patentansprüche

1. Partikuläres Lithiummetall-Kompositmaterial, welches eine Kern/Schale-Morphologie besitzt, wobei die Schale aus einem P-haltigen Kompositmaterial besteht und der Kern aus metallischem Lithium, wobei die Schale P in der Oxidationsstufe 3 oder niedriger enthält und der Kern aus metallischem Lithium besteht sowie
die Schale kein röntgendiffraktometrisch nachweisbares Lithiumphosphat enthält und die einzelnen Partikel nicht größer als 500 µm sind.

2. Kompositmaterial nach Anspruch 1, **dadurch gekennzeichnet, dass** mindestens 90 Gew.-%, bevorzugt mindestens 95 Gew.-% und besonders bevorzugt mindestens 97 Gew.-% des enthaltenen Lithiums in metallischer Form vorliegen.

3. Kompositmaterial nach Anspruch 1 oder 2, **dadurch gekennzeichnet, dass** die Reinheit des eingesetzten Lithiummetalls mindestens 98 Gew.-% beträgt.

4. Kompositmaterial nach Anspruch 1 bis 3, **dadurch gekennzeichnet, dass** der Natrium-Gehalt des Kompositmaterials bezogen auf den Gesamtlithiumgehalt maximal 200 ppm, bevorzugt maximal 100 ppm und besonders bevorzugt maximal 50 ppm beträgt.

5. Kompositmaterial nach Anspruch 1 bis 4, **dadurch gekennzeichnet, dass** die mittlere Partikelgröße zwischen 1 und 500 µm, bevorzugt zwischen 10 und 200 µm und besonders bevorzugt zwischen 15 und 100 µm beträgt.

6. Verfahren zur Herstellung eines partikulären phosphorhaltigen Lithiummetall-Kompositmaterials gemäß Anspruch 1 bis 5, **dadurch gekennzeichnet, dass** geschmolzenes, tröpfchenförmiges Lithiummetall in einem Kohlenwasserstofflösungsmittel mit einer Phosphorquelle enthaltend den Phosphor in der Oxidationsstufe 3, ausgewählt aus den Gruppen Phosphonsäure, Alkylphosphonsäure, Alkylphosphonsäure-dialkylester, Alkylphosphonsäure-dihalogenide, Alkenylphosphonsäure, Alkenylphosphonsäure-dihalogenide, Alkenylphosphonsäure-dialkylester, Phosphorigsäure-dialkylester, Phosphorigsäure-dialkenylester und Phosphorigsäure-diarylester, Phosphorigsäure-trialkylester, Phosphorigsäurealkyester-dihalogenide umgesetzt wird.

7. Verfahren nach Anspruch 6, bei dem Phosphonsäurederivate, die mindestens einen ungesättigten Kohlenwasserstoffrest enthalten, eingesetzt werden.

8. Verfahren nach Anspruch 6 oder 7, **dadurch gekennzeichnet, dass** die Umsetzung bei Temperaturen im Bereich 180°C bis 250°C und besonders bevorzugt 180°C bis 220°C vorgenommen wird.

9. Verfahren nach Anspruch 6 bis 8, **dadurch gekennzeichnet, dass** als Kohlenwasserstofflösungsmittel gesättigte Lösungsmittel verwendet werden, die Siedepunkte von mindestens 180°C, vorzugsweise mindestens 200°C und besonders bevorzugt Siedepunkte > 220°C aufweisen.

10. Verfahren nach Anspruch 6 bis 9, **dadurch gekennzeichnet, dass** als Kohlenwasserstofflösungsmittel eines ausgewählt aus der Gruppe bestehend aus Decan, Undekan, Dodecan oder beliebige Mischungen dieser genannten Verbindungen, eingesetzt wird.

11. Verfahren nach Anspruch 6 bis 10, **dadurch gekennzeichnet, dass** als Kohlenwasserstofflösungsmittel kommerziell erhältliche Paraffin-Siedeschnitte verwendet werden.

12. Verwendung des partikulären phosphorbeschichteten Lithiummetall-Kompositmaterials gemäß Anspruch 1 bis 5 oder erhalten gemäß Anspruch 6 bis 11 für die Vorlithiierung von elektrochemisch aktiven Materialien, vorzugsweise in Graphit-, Legierungs- oder Konversionsanoden für Lithiumbatterien.

13. Verwendung des partikulären phosphorbeschichteten Lithiummetall-Kompositmaterials gemäß Anspruch 1 bis 5 oder erhalten gemäß Anspruch 6 bis 11 für die Herstellung von Elektroden, insbesondere Anoden für Lithiumbatterien.

## Claims

1. A particulate lithium metal composite material with a core/shell morphology, the shell consisting of a P-containing composite material and the core consisting of metallic lithium, wherein the shell contains P in the oxidation state 3 or lower and the core consists of metallic lithium and the shell does not contain any X-ray diffractometrically detectable lithium phosphate, and the individual particles are not greater than 500 µm.

2. The composite material according to claim 1, **characterized in that** at least 90% by weight, preferably at least 95% by weight and particularly preferably at least 97% by weight of the lithium contained are present in metallic form.

3. The composite material according to claim 1 or 2, **characterized in that** the purity of the lithium metal used is at least 98% by weight.

4. The composite material according to claims 1 to 3, **characterized in that** the sodium content of the composite material based on the total lithium content is not more than 200 ppm, preferably not more than 100 ppm and particularly preferably not more than 50 ppm.

5. The composite material according to claim 1 to 4, **characterized in that** the average particle size is between 1 and 500 µm, preferably between 10 and 200 µm, and particularly preferably between 15 and 100 µm.

6. A process for the preparation of a particulate phosphorus-containing lithium metal composite material according to claims 1 to 5, **characterized in that** molten, droplet-shaped lithium metal in a hydrocarbon solvent is reacted with a phosphorus source containing phosphorus in the oxidation state 3, selected from the groups phosphonic acid, alkylphosphonic acid, dialkyl alkylphosphonate, alkylphosphonic acid dihalide, alkenylphosphonic acid, alkenylphosphonic acid dihalide, dialkyl alkenylphosphonate, dialkyl phosphite, dialkenyl phosphite, and diaryl phosphite, trialkyl phosphite, alkyl dihalophosphite.

7. The process of claim 6, wherein phosphonic acid derivatives containing at least one unsaturated hydrocarbon radical are used.

8. The process according to claim 6 or 7, **characterized in that** the reaction takes place at temperatures in the range of 180 °C to 250 °C, and particularly preferably 180 °C to 220 °C.

9. The process according to claims 6 to 8, **characterized in that** saturated solvents are used as a hydrocarbon solvent, which have boiling points of at least 180 °C, preferably at least 200 °C and particularly preferably have boiling points > 220 °C.

10. The process according to claims 6 to 9, **characterized in that** one selected from the group consisting of decane, undecane, dodecane or any mixtures of these compounds mentioned is used as a hydrocarbon solvent.

11. The process according to claim 6 to 10, **characterized in that** commercially available paraffin boiling cuts are used as a hydrocarbon solvent.

12. Use of the particulate phosphorus-coated lithium metal composite material according to claims 1 to 5 or obtained according to claims 6 to 11 for the prelithiation of electrochemically active materials, preferably in graphite, alloy or conversion anodes for lithium batteries.

13. Use of the particulate phosphorus-coated lithium metal composite material according to claims 1 to 5 or obtained according to claims 6 to 11 for the production of electrodes, in particular anodes for lithium batteries.

## Revendications

1. Matériau composite de métal lithium particulaire, qui possède une morphologie noyau/enveloppe, dans lequel l'enveloppe consiste en un matériau composite contenant du P et le noyau consiste en lithium métallique, dans lequel la coque contient du P à l'état d'oxydation 3 ou inférieur et le noyau consiste en lithium métallique, et également l'enveloppe ne contient pas de phosphate de lithium détectable par diffractométrie aux rayons X et les particules individuelles ne dépassent pas 500 µm.

2. Matériau composite selon la revendication 1, **caractérisé en ce qu'**au moins 90 % en poids, de préférence au moins 95 % en poids et de manière particulièrement préférée, au moins 97 % en poids du lithium contenu se présentent sous forme métallique.

3. Matériau composite selon la revendication 1 ou 2, **caractérisé en ce que** la pureté du métal lithium utilisé est d'au moins 98 % en poids.

4. Matériau composite selon les revendications 1 à 3, **caractérisé en ce que** la teneur en sodium du matériau composite par rapport à la teneur en lithium totale est au maximum de 200 ppm, de préférence au maximum de 100 ppm et de manière particulièrement préférée au maximum de 50 ppm.

5. Matériau composite selon les revendications 1 à 4, **caractérisé en ce que** la taille moyenne de particule se situe entre 1 et 500 µm, de préférence entre 10 et 200 µm et de manière particulièrement préférée entre 15 et 100 µm.

6. Procédé de fabrication d'un matériau composite de métal lithium particulaire contenant du phosphore selon les revendications 1 à 5, **caractérisé en ce que** l'on fait réagir du métal lithium fondu formant des gouttes dans un solvant hydrocarbure avec une source de phosphore contenant le phosphore à l'état d'oxydation 3, choisi dans le groupe d'acide phosphonique, acide alkylphosphonique, dialkylester d'acide alkylphosphonique, dihalogénure d'acide alkylphosphonique, acide alcényl-phosphonique, dihalogénure d'acide alcénylphosphonique, dialkylester d'acide alcénylphosphonique, dialkylester d'acide phosphoreux, dialcénylester d'acide phosphoreux et diarylester d'acide phosphoreux, trialkylester d'acide phosphoreux, dihalogénure d'alkylester d'acide phosphoreux.

7. Procédé selon la revendication 6, dans lequel des dérivés d'acide phosphonique qui contiennent au moins un résidu d'hydrocarbure insaturé, sont utilisés.

8. Procédé selon la revendication 6 ou 7, **caractérisé en ce que** la réaction est entreprise à des températures dans la plage de 180 °C à 250 °C et de manière particulièrement préférée, de 180 °C à 220 °C.

9. Procédé selon les revendications 6 à 8, **caractérisé en ce que** l'on utilise comme solvant hydrocarbure, des solvants saturés qui présentent des points d'ébullition d'au moins 180 C, de préférence d'au moins 200 °C et de manière particulièrement préférée, des points d'ébullition > 220 °C.

10. Procédé selon les revendications 6 à 9, **caractérisé en ce que** l'on utilise comme solvant hydrocarbure, un solvant choisi dans le groupe consistant en décane, undécane, dodécane ou des mélanges quelconques de ces composés cités.

11. Procédé selon les revendications 6 à 10, **caractérisé en ce que** l'on utilise comme solvant hydrocarbure des fractions d'ébullition de paraffine disponibles dans le commerce.

12. Utilisation de matériau composite de métal lithium particulaire revêtu de phosphore selon les revendications 1 à 5 ou obtenu selon les revendications 6 à 11 pour la prélithiation de matériaux électrochimiquement actifs, de préférence dans des anodes de graphite, d'alliages ou de conversion pour des piles au lithium.

13. Utilisation de matériau composite de métal lithium particulaire revêtu de phosphore selon les revendications 1 à 5 ou obtenu selon les revendications 6 à 11 pour la fabrication d'électrodes, en particulier d'anodes pour des piles au lithium.
